# EUROPÄISCHE PATENTSCHRIFT

(11) **EP 1 706 459 B1**
(45) Veröffentlichungstag und Bekanntmachung des Hinweises auf die Patenterteilung: **19.11.2008**
(21) Anmeldenummer: 05700825.2
(22) Anmeldetag: 12.01.2005
(51) Int. Cl.: C09B 19/02

(54) **TRIPHENDIOXAZINPIGMENTE**
TRIPHENDIOXAZINE PIGMENTS
PIGMENTS DE TRIPHENE DIOXAZINE

(30) Priorität: 14.01.2004 DE 102004001883
(43) Veröffentlichungstag der Anmeldung: 04.10.2006
(73) Patentinhaber: Clariant Produkte (Deutschland) GmbH, 65929 Frankfurt am Main (DE)
(72) Erfinder: BLUM, David, 65812 Bad Soden (DE); PLÜG, Carsten, 64342 SeeheimJugenheim/Ober-Beerbach (DE); REIPEN, Tanja, 55124 Mainz (DE)
(74) Vertreter: Hütter, Klaus
(86) Internationale Anmeldenummer: PCT/EP2005/000197
(87) Internationale Veröffentlichungsnummer: WO 2005/068560

(56) Entgegenhaltungen:
- FR-A- 789 805
- US-A- 2 564 381
- US-A- 4 336 377

## Beschreibung

Die vorliegende Erfindung betrifft neue Triphendioxazinpigmente, ein Verfahren zu ihrer Herstellung und ihre Verwendung.

Triphendioxazin stellt einen farbstarken Chromophor dar, der sich in einer Reihe blauer und violetter Farbstoffe und Pigmente wieder findet und für deren Herstellung verschiedene Möglichkeiten bekannt sind.

In der EP-A-0 400 429 werden substituierte Triphendioxazine durch Cyclisierung von entsprechend substituierten Benzochinonen in schwefelsaurem Medium hergestellt, die synthesebedingt ein oder mehrere löslichmachende Sulfogruppen in das Molekül einführen und als Vorstufen für Reaktivfarbstoffe eingesetzt werden.

Der vorliegenden Erfindung lag die Aufgabe zugrunde, neue rote bis violette Triphendioxazinverbindungen mit pigmentären Eigenschaften bereitzustellen.

Es wurde gefunden, dass Verbindungen der Formel (I) überraschenderweise gute pigmentäre Eigenschaften aufweisen.
Die unsubstituierte Verbindung der Formel (I), wobei X für Chlor, und R¹ für ein unsubstituiertes Phenylradikal steht, ist als Pigment ohne Interesse, da sie eine mangelnde Lichtechtheit zeigt.

Gegenstand der Erfindung sind Triphendioxazinpigmente der Formel (I) 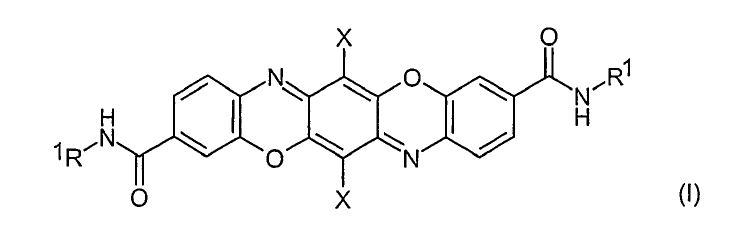 wobei.
- X: für Wasserstoff oder Chlor, und
- R¹: für Phenyl steht, das mit 1 bis 5 Resten aus der Gruppe C₁-C₄-Alkyl, Halogen, C₁-C₄-Alkoxy, Acetylamino, Aminocarbonyl, Methylaminocarbonyl und C₁-C₄-Alkoxycarbonyl substituiert ist;
oder für Phenyl steht, das in 2,3- oder in 3,4-Position mit einem bivalenten Rest der Formel -NH-(CO)ₘ-NR²-, -CR²=CH-CO-NH-, -CR²=N-CO-NH-, -CO-NH-CO-NR²-, -CO-(NH)ₘ-CO- oder -O-(CO)ₘ-NH-
unter Bildung eines fünf- oder sechsgliedrigen Ringes anneliert ist,
wobei R² Wasserstoff, Methyl, Ethyl oder Phenyl und m 1 oder 2 bedeuten.

Bevorzugte Verbindungen der Formel (I) sind solche der Formeln (la), (Ib) und (Ic). 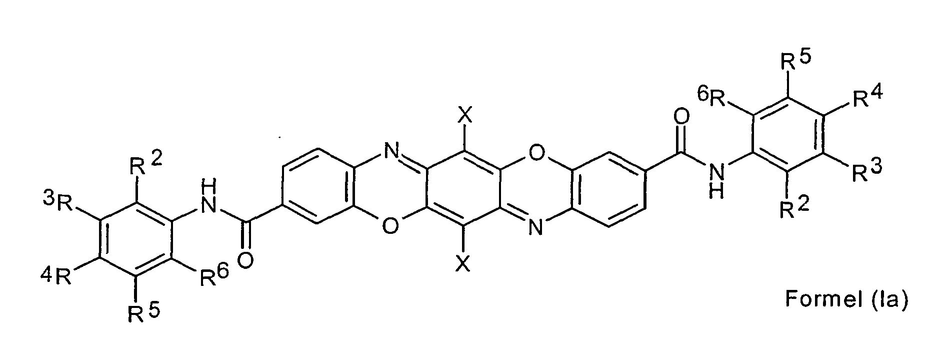 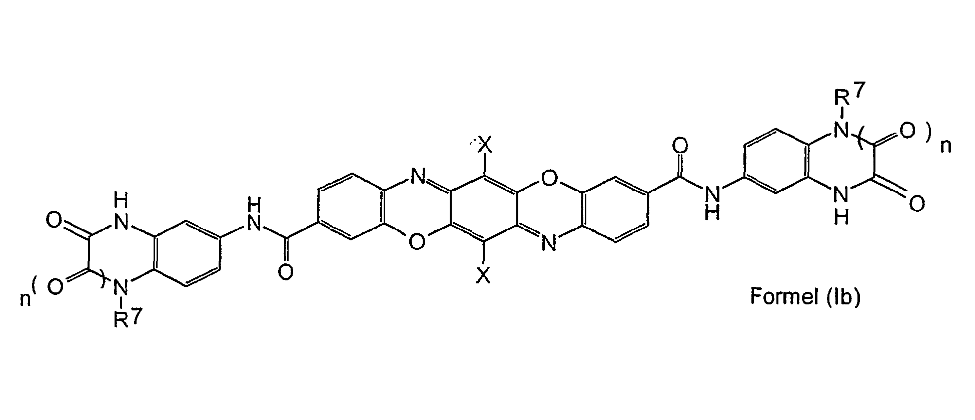 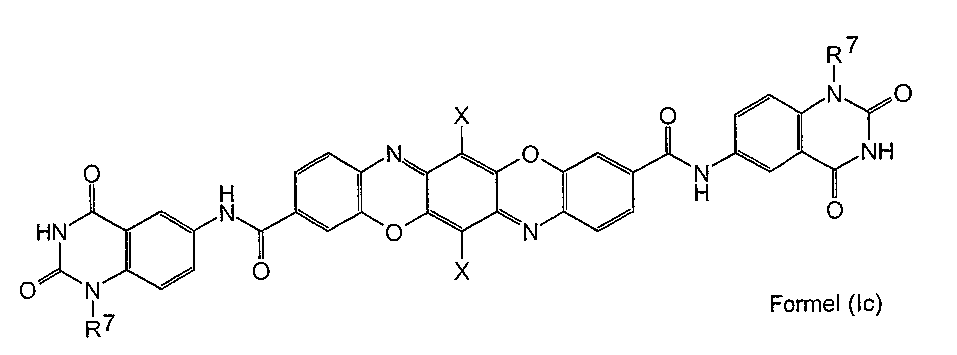 wobei X wie vorstehend definiert ist;
R², R³, R⁴, R⁵ und R⁶, unabhängig voneinander, für Wasserstoff, Halogen, insbesondere Chlor, C₁-C₄-Alkyl, insbesondere Methyl oder Ethyl, oder C₁-C₄-Alkoxy, insbesondere Methoxy oder Ethoxy, stehen, wobei R², R³ und R⁴ nicht
gleichzeitig Wasserstoff sind;
R⁷ für Wasserstoff, Phenyl oder C₁-C₄-Alkyl, insbesondere Methyl oder Ethyl, und
n für 0 oder 1 stehen.

Die EP-A-0 400 429 beschreibt die Herstellung von Triphendioxazinen als einstufiges Verfahren durch Einwirken von Perboraten, Percarbonaten oder Mischungen in Gegenwart von Schwefelsäure auf das entsprechend substituierte Vorprodukt. Es hat sich nun gezeigt, dass Verbindungen der Formel (I) auf diesem Wege nicht zugänglich sind, da entweder keine Reaktion stattfindet oder, unter schärferen Bedingungen, eine Sulfonierungsreaktion stattfindet, die der Bildung der Verbindungen (I) entgegensteht, und/oder die Amidbindungen gespalten werden.

Es wurde gefunden, dass die neuen Verbindungen der Formel (I) nach dem folgenden Schema hergestellt werden können: 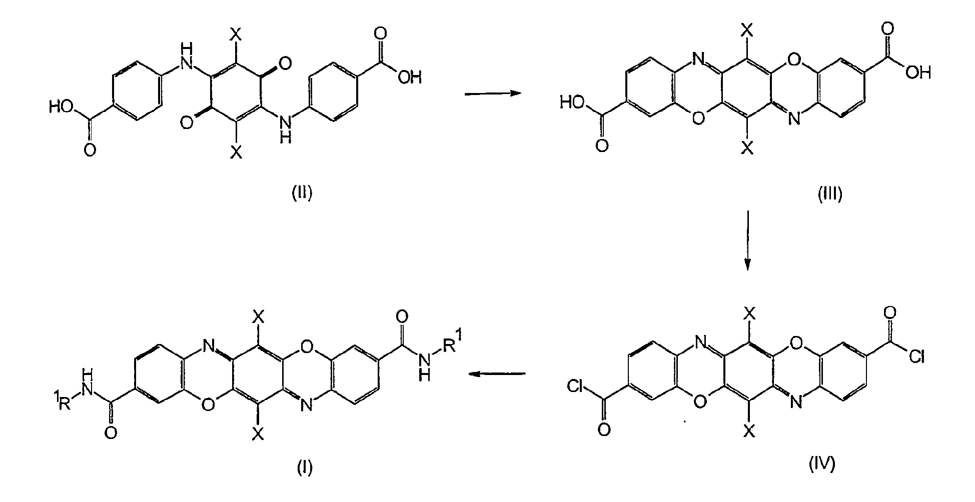 worin X und R¹ die oben angegebene Bedeutung haben.

Die FR-A-789 805 beschreibt die Herstellung der Verbindungen der Formeln (II) und (III) für X=Cl, wobei als Oxidationsmittel Eisen(III)chlorid in Nitrobenzol Verwendung findet.

Gegenstand der Erfindung ist daher auch ein Verfahren zur Herstellung eines Triphendioxazinpigments der Formel (I), dadurch gekennzeichnet, dass eine Verbindung der Formel (III) mit einem anorganischen Säurechlorid zu einem Säurechlorid der Formel (IV) umgesetzt und dieses mit einem aromatischen Amin der Formel NH₂-R¹, wobei R¹ die vorstehend genannten Bedeutungen hat, in einem aprotischen organischen Lösemittel kondensiert wird.

Die Verbindung der Formel (III) kann nach der in FR-A-789 805 angegebenen Methode hergestellt werden. Überraschenderweise wurde jedoch gefunden, dass auch ein oxidativer Ringschluss in Schwefelsäure in guten Ausbeuten und ohne störende Nebenreaktionen durchgeführt werden kann, wenn als Ausgangsprodukt eine Verbindung der Formel (II) eingesetzt wird. Der Ringschluss erfolgt vorzugsweise in konzentrierter Schwefelsäure, bevorzugt 80 bis 100 gew.-%ig, besonders bevorzugt 90 bis 96 gew.-%ig, und mit einem Oxidationsmittel, bevorzugt Mangandioxid, Natrium-, Kalium- oder Ammonium-peroxodisulfat, -peroxocarbonat oder -perborat, bei einer Temperatur zwischen 0 und 60°C, bevorzugt 5 und 30°C. Das Produkt der Formel (III) kann durch Filtration entweder direkt oder nach Verdünnung mit Wasser aus dem Reaktionsgemisch isoliert werden.

Das Säurechlorid der Formel (IV) ist aus der freien Carbonsäure durch Umsetzung mit anorganischen Säurechloriden, bevorzugt Thionylchlorid, Sulfurylchlorid, Phosphoroxychlorid, Phosphor(III)chlorid oder Phosphor(V)chlorid, besonders bevorzugt Thionylchlorid, zugänglich. Die Umsetzung erfolgt zweckmäßigerweise in einem aprotischen organischen Lösemittel, wie z.B. o-Dichlorbenzol oder Chlorbenzol, mit einer 2 bis 5 molaren Menge an anorganischem Säurechlorid, bezogen auf die Verbindung der Formel (III), und bei Temperaturen zwischen 40 und 100°C, bevorzugt 70 und 90°C. Alternativ erfolgt die Reaktion auch beim Erhitzen mit einem anorganischen Säurechlorid ohne Lösungsmittel in Anwesenheit einer katalytischen Menge Dimethylformamid bei einer Temperatur zwischen 40 und 100°C, bevorzugt 70 und 90°C.
Die Verbindung der Formel (IV) wird nun mit einem Amin der Formel NH₂-R¹ in einem aprotischen organischen Lösungsmittel, bevorzugt Chlorbenzol, o-Dichlorbenzol, Dimethylformamid oder N-Methylpyrrolidon, gegebenenfalls in Gegenwart einer Hilfsbase, wie Natrium- oder Kaliumcarbonat, -hydrogencarbonat oder -acetat, kondensiert. Die Umsetzung erfolgt zweckmäßigerweise mit einer zweifachen bis dreifachen molaren Menge an Amin der Formel NH₂-R¹, bezogen auf die Verbindung der Formel (IV), und bei Temperaturen zwischen 20 und 150°C, bevorzugt zwischen 70 und 120°C.
Oftmals ist es vorteilhaft, die bei der Synthese anfallenden Produkte (Rohpigmente) durch Nachbehandlung in organischen Lösungsmitteln, in denen die Pigmente selbst nicht gelöst werden, und bei erhöhten Temperaturen, beispielsweise bei 60 bis 200°C, insbesondere bei 70 bis 150°C, vorzugsweise bei 75 bis 100°C, in eine feindisperse Form mit oft weiter verbesserten Pigmenteigenschaften zu überführen. Die Nachbehandlung wird vorzugsweise mit einer Mahl- oder Knetoperation kombiniert.

Die erfindungsgemäßen Triphendioxazinpigmente lassen sich zum Pigmentieren von hochmolekularen organischen Materialien natürlicher oder synthetischer Herkunft einsetzen, beispielsweise von Kunststoffen, Harzen, Lacken, Anstrichfarben, elektrophotographischen Tonern und Entwicklern, Elektretmaterialien, Farbfilter sowie von Tinten, Druckfarben und Saatgut.

Hochmolekulare organische Materialien, die mit den erfindungsgemäßen Triphendioxazinpigmenten pigmentiert werden können, sind beispielsweise Celluloseverbindungen, wie beispielsweise Celluloseether und -ester, wie Ethylcellulose, Nitrocellulose, Celluloseacetate oder Cellulosebutyrate, natürliche Bindemittel, wie beispielsweise Fettsäuren, fette Öle, Harze und deren Umwandlungsprodukte, oder Kunstharze, wie Polykondensate, Polyaddukte, Polymerisate und Copolymerisate, wie beispielsweise Aminoplaste, insbesondere Harnstoff- und Melaminformaldehydharze, Alkydharze, Acrylharze, Phenoplaste und Phenolharze, wie Novolake oder Resole, Harnstoffharze, Polyvinyle, wie Polyvinylalkohole, Polyvinylacetale, Polyvinylacetate oder Polyvinylether, Polycarbonate, Polyolefine, wie Polystyrol, Polyvinylchlorid, Polyethylen oder Polypropylen, Poly(meth)acrylate und deren Copolymerisate, wie Polyacrylsäureester oder Polyacrylnitrile, Polyamide, Polyester, Polyurethane, Cumaron-Inden- und Kohlenwasserstoffharze, Epoxidharze, ungesättigte Kunstharze (Polyester, Acrylate) mit den unterschiedlichen Härtemechanismen, Wachse, Aldehyd- und Ketonharze, Gummi, Kautschuk und seine Derivate und Latices, Casein, Silikone und Silikonharze; einzeln oder in Mischungen.
Dabei spielt es keine Rolle, ob die erwähnten hochmolekularen organischen Verbindungen als plastische Massen, Schmelzen oder in Form von Spinnlösungen, Dispersionen, Lacken, Anstrichstoffen oder Druckfarben vorliegen. Je nach Verwendungszweck erweist es sich als vorteilhaft, die erfindungsgemäßen Triphendioxazinpigmente als Blend oder in Form von Präparationen oder Dispersionen zu benutzen. Bezogen auf das zu pigmentierende, hochmolekulare organische Material setzt man die erfindungsgemäßen Triphendioxazinpigmente in einer Menge von 0,05 bis 30 Gew.-%, vorzugsweise 0,1 bis 15 Gew.-%, ein.

Es ist in manchen Fällen auch möglich, anstelle eines gemahlenen und/oder gefinishten erfindungsgemäßen Triphendioxazinpigments ein entsprechendes Crude mit einer BET-Oberfläche von größer als 2 m²/g, bevorzugt größer als 5 m²/g, einzusetzen. Dieser Crude kann zur Herstellung von Farbkonzentraten in flüssiger oder fester Form in Konzentrationen von 5 bis 99 Gew.-%, allein oder gegebenenfalls in Mischung mit anderen Crudes oder Fertigpigmenten, verwendet werden.

Die erfindungsgemäßen Triphendioxazinpigmente sind auch geeignet als Farbmittel in elektrophotographischen Tonern und Entwicklern, wie beispielsweise Ein- oder Zweikomponentenpulvertonern (auch Ein- oder Zweikomponenten-Entwickler genannt), Magnettoner, Flüssigtoner, Latextoner, Polymerisationstoner sowie Spezialtoner.
Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im nachhinein mit diesen Zusätzen modifiziert werden.

Des weiteren sind die erfindungsgemäßen Triphendioxazinpigmente geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.
Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Gegenstand der Erfindung ist weiterhin die Verwendung der Triphendioxazinpigmente als Farbmittel für Drucktinten, insbesondere für Ink-Jet-Tinten.
Unter Ink-Jet-Tinten versteht man sowohl Tinten auf wässriger (einschließlich Mikroemulsionstinten) und nicht-wässriger ("solvent-based") Basis, UV-härtbare Tinten sowie solche Tinten, die nach dem Hot-Melt-Verfahren arbeiten.

Ink-Jet-Tinten auf Lösungsmittelbasis enthalten im wesentlichen 0,5 bis 30 Gew.-%, vorzugsweise 1 bis 15 Gew.-%, der erfindungsgemäßen Triphendioxazinpigmente, 70 bis 95 Gew.-% eines organischen Lösungsmittels oder Lösungsmittelgemisches und/oder einer hydrotropen Verbindung. Gegebenenfalls können die lösemittelbasierenden Ink-Jet-Tinten Trägermaterialien und Bindemittel enthalten, die im "Solvens" löslich sind, wie z.B. Polyolefine, Natur- und Synthesekautschuk, Polyvinylchlorid,
Vinylchlorid/Vinylacetat-Copolymerisate, Polyvinylbutyrale, Wachs/Latex-Systeme oder Kombinationen dieser Verbindungen.
Gegebenenfalls können die lösungsmittelbasierenden Ink-Jet-Tinten noch weitere Zusatzstoffe enthalten, wie z.B. Netzmittel, Entgaser/Entschäumer, Konservierungsmittel und Antioxidantien.

Mikroemulsionstinten basieren auf organischen Lösemitteln, Wasser und gegebenenfalls einer zusätzlichen Substanz, die als Grenzflächenvermittler wirkt (Tensid). Mikroemulsionstinten enthalten 0,5 bis 30 Gew.-%, vorzugsweise 1 bis 15 Gew.-% der erfindungsgemäßen Triphendioxazinpigmente, 0,5 bis 95 Gew.-% Wasser und 0,5 bis 95 Gew.-% organische Lösungsmittel und/oder Grenzflächenvermittler.
UV-härtbare Tinten enthalten im wesentlichen 0,5 bis 30 Gew.-% der erfindungsgemäßen Triphendioxazinpigmente, 0,5 bis 95 Gew.-% Wasser, 0,5 bis 95 Gew.-% eines organischen Lösungsmittels oder Lösungsmittelgemisches, 0,5 bis 50 Gew.-% eines strahlungshärtbaren Bindemittels und gegebenenfalls 0 bis 10 Gew.-% eines Photoinitiators.
Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60 und ca. 140°C liegt.
Hot-Melt-Ink-Jet-Tinten bestehen im Wesentlichen aus 20 bis 90 Gew.-% Wachs und 1 bis 10 Gew.-% der erfindungsgemäßen Triphendioxazinpigmente. Weiterhin können 0 bis 20 Gew.-% eines zusätzlichen Polymers (als "Farbstofflöser"), 0 bis 5 Gew.-% Dispergiermittel, 0 bis 20 Gew.-% Viskositätsveränderer, 0 bis
20 Gew.-% Plastifizierer, 0 bis 10 Gew.-% Klebrigkeitszusatz, 0 bis 10 Gew.-% Transparenzstabilisator (verhindert z.B. die Kristallisation des Wachses) sowie 0 bis 2 Gew.-% Antioxidans enthalten sein.

Drucktinten, insbesondere Ink-Jet-Tinten, können hergestellt werden, indem das Triphendioxazinpigment in das Mikroemulsionsmedium, in das nicht-wässrige Medium oder in das Medium zur Herstellung der UV-härtbaren Tinte oder in das Wachs zur Herstellung einer Hot-Melt-Ink-Jet-Tinte eindispergiert wird.

Zweckmäßigerweise werden die dabei erhaltenen Drucktinten für Ink-Jet-Anwendungen anschließend filtriert (z.B. über einen 1 µm Filter).

Weiterhin sind die erfindungsgemäßen Triphendioxazinpigmente auch als Farbmittel für Farbfilter, sowohl für die additive wie auch für die subtraktive Farberzeugung, sowie als Farbmittel für elektronische Tinten ("electronic inks" bzw. "e-inks") oder "electronic paper" ("e-paper") geeignet.
Bei der Herstellung so genannter Farbfilter, sowohl reflektierender wie durchsichtiger Farbfilter, werden Pigmente in Form einer Paste oder als pigmentierte Photoresists in geeigneten Bindemitteln (Acrylate, Acrylester, Polyimide, Polyvinylalkohole, Epoxide, Polyester, Melamine, Gelatine, Caseine) auf die jeweiligen LCD-Bauteilen (z.B. TFT-LCD= Thin Film Transistor Liquid Crystal Displays oder z.B. ((S) TN-LCD = (Super) Twisted Nematic-LCD) aufgebracht. Neben einer hohen Thermostabilität ist für eine stabile Paste bzw. einem pigmentierten Photoresist auch eine hohe Pigmentreinheit Voraussetzung.

Darüber hinaus können die pigmentierten Color Filter auch durch Ink-Jet-Druckverfahren oder andere geeignete Druckverfahren aufgebracht werden.

Zur Beurteilung der Eigenschaften der nach der Erfindung hergestellten Pigmente auf dem Lacksektor wurde aus der Vielzahl der bekannten Lacke ein aromatenhaltiger Alkydmelaminharzlack (AM-Lack) auf Basis eines mittelöligen, nicht trocknenden Alkydharzes ausgewählt.

Die erfindungsgemäßen Pigmente zeichnen sich durch gute Echtheitseigenschaften aus, insbesondere besitzen sie hohe Lösemittelechtheiten und hohe Lichtechtheiten. Sie enthalten keine für die Umwelt bedenklichen Schwermetalle. Die aufgezählten Eigenschaften qualifizieren die erfindungsgemäßen Pigmente insbesondere zum Einsatz als Farbmittel im Druckbereich (insbesondere Druckfarben, Herstellung von Ink-Jet Tinten) sowie zur Verwendung in Lacken und in Kunststoffen, Farbfiltern, Tonern und zur Einfärbung von Saatgut.

Mit dem Begriff "Teile" sind in den folgenden Beispielen Gewichtsteile gemeint.

### Beispiel 1

In 62,5 Teile Ethanol (96 %) werden 3,4 Teile 4-Aminobenzoesäure eingetragen. Zu der Lösung werden 1,0 Teile Wasser und 4,1 Teile Natriumacetat (wasserfrei) gegeben. Die Mischung wird erwärmt und bei 59 bis 69°C portionsweise mit 3,2 Teilen Chloranil versetzt. Nach einer Reaktionszeit von 17 Stunden bei etwa 77°C lässt man den Reaktionsansatz unter Rühren auf Raumtemperatur abkühlen. Nach der Zugabe von 3,5 Teilen Salzsäure (30 %ig) wird eine Stunde bei Raumtemperatur gerührt. Der Niederschlag wird abfiltriert, mit Ethanol und anschließend mit dest. Wasser gewaschen und bei 75°C im Vakuum getrocknet. Man erhält 4,9 Teile der Zielverbindung. Zur Reinigung wird der Presskuchen in 38,6 Teilen NMP für ein Stunde verrührt, der Rückstand abfiltriert und mit weiteren 38,6 Teilen NMP gewaschen. Anschließend wird der Presskuchen erneut dieser Reinigungsoperation unterworfen und nach dem Spülen mit NMP mit dest. Wasser gewaschen. Man erhält 3,6 Teile einer Verbindung mit der folgenden Formel 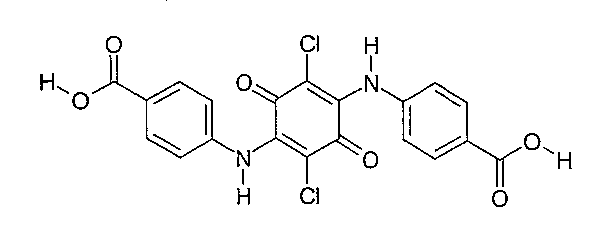 Ausbeute: 64 %
¹H-NMR (DMSO-d6): 12.8 (s(br), 2H, COOH); 9.8 (s, 2H, Amid-NH); 7.8 (d, 4H, arom. CH, ³J = 8.7 Hz); 7.1 (d, 4H, arom. CH, ³J = 8.7 Hz).
MALDI-TOF (DHB; m/z): 445.5

### Beispiel 2

In 45,6 Teile Schwefelsäure (96 %) werden bei Raumtemperatur 2,5 Teile Benzochinon aus Beispiel 1 eingetragen und für 15 min gerührt. Während 90 min werden 2,0 Teile Mangandioxid (90-95 %ig, aktiviert) so eingetragen, dass die Temperatur nicht über 40°C ansteigt. Die Suspension wird filtriert. Der Filterrückstand wird gründlich mit Schwefelsäure (96 %ig) gewaschen und das dunkelbraune Filtrat in 330 Teile Eiswasser gegossen. Nach 15 min wird der Niederschlag abfiltriert und der Filterkuchen gründlich mit dest. Wasser säurefrei und mit Ethanol gewaschen. Zur Reinigung wird der Feststoff in 30 Teilen Dioxan verrührt, wenige Minuten zum Sieden erhitzt und anschließend der Rückstand noch warm abfiltriert. Anschließend wird das Oxidationsprodukt dieser Reinigungsprozedur erneut unterzogen. Nach der Filtration wird gründlich mit Dioxan gewaschen und der erhaltene rot-braune Feststoff bei 80°C im Vakuum getrocknet. Man erhält 1,1 Teile eines Triphendioxazins der folgenden Formel 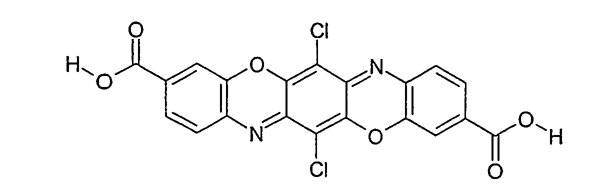 Ausbeute: 45 %
MALDI-TOF (DHB; m/z): 443.3

### Beispiel 3

In 615,1 Teile Thionylchlorid werden 58,9 Teile der Triphendioxazin-Carbonsäure aus Beispiel 2 und 1,0 Teile DMF gegeben. Nach einer Reaktionszeit von 6 Stunden bei 75°C wird der Reaktionsansatz mit Eis gekühlt. Nach einstündigem Rühren im Eisbad wird der Niederschlag abgesaugt und gründlich mit Hexan gewaschen. Man erhält 39,6 Teile eines braunen Feststoffs der folgenden Formel 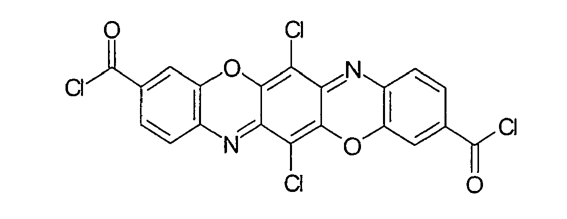 Ausbeute: 62 %
MALDI-TOF (DHB): 480.4

### Beispiel 4

In NMP werden 1,0 Äquivalente feingepulvertes Triphendioxazin-Säurechlorid aus Beispiel 3 (Ansatzgröße: siehe Tabelle) unter Rühren eingetragen. Zu der Mischung werden 2,0 bis 2,5 Äquivalente Aminkomponente (in NMP) und gegebenenfalls 2,0 bis 2,5 Äquivalente Kaliumcarbonat gegeben, wobei ein Temperaturanstieg zu beobachten ist. Nach der Reaktionszeit bei 20-120°C (siehe Tabelle) wird die Suspension abgekühlt und der Niederschlag abfiltriert. Der Filterkuchen wird gründlich mit Ethanol und Wasser gewaschen. Das Rohpigment wird in DMF suspendiert und bei 120°C gerührt. Der Niederschlag wird heiß abfiltriert, mit DMF und anschließend mit Wasser gewaschen, im Vakuum getrocknet und ergibt ein rot-braunes bis rotstichig violettes Produkt der folgenden Formel 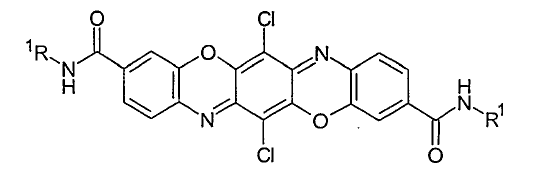 wobei der Rest R¹ durch die eingesetzte Aminkomponente bestimmt wird.

**Tabelle 1 (Beispiele 4A-4R)**

| Bsp. | Aminkomponente R¹-NH₂ in NMP (ml) | Ansatz- größe (mol) | NMP (ml, S.-chlorid) | K₂CO₃ | t (h) | T (°C) | Ausb. |
|---|---|---|---|---|---|---|---|
| 4A | 2-Methoxy-phenylamin (100) | 0.093 | 500 | ja | 1 | 70 | 31 % |
| 4B | 3-Methoxy-phenylamin (100) | 0.084 | 500 | ja | 2 | 80 | 25 % |
| 4C | 2-Chloranilin (100) | 0.113 | 800 | ja | 2 | 70 | 36 % |
| 4D | 4-Chloranilin (100) | 0.094 | 900 | ja | 12 | 20 | 46 % |
| 4E | 2-Ethoxy-phenylamin (100) | 0.078 | 700 | ja | 1 | 70 | 37 % |
| 4F | 3,5-Dimethylanilin (100) | 0.094 | 800 | ja | 4 | 120 | 19 % |
| 4G | 2-Aminobenzoesäuremethyl- | 0.092 | 800 | ja | 2 | 80 | 31 % |
| | ester (80) | | | | | | |
| 4H | 3-Tolylamin (50) | 0.025 | 350 | ja | 3 | 120 | 88 % |
| 4I | 3-Chloranilin (50) | 0.090 | 350 | nein | 3 | 120 | 92 % |
| 4J | 6-Amino-7-methoxy-1,4-dihydro- | 0.023 | 250 | nein | 3 | 120 | 73 % |
| | chinoxalin-2,3-dion (250) | | | | | | |
| 4K | 5-Amino-1-methyl-1,3-dihydro- | 0.038 | 350 | nein | 3 | 120 | 63 % |
| | benzimidazol-2-on (100) | | | | | | |
| 4L | 5-Amino-1-ethyl-1,3-dihydro- | 0.041 | 350 | nein | 3 | 120 | 87 % |
| | benzimidazol-2-on (100) | | | | | | |
| 4M | 4-Aminoacetanilid (200) | 0.043 | 350 | nein | 3 | 120 | 93 % |
| 4N | 6-Amino-1-methyl-1H-chinazolin- | 0.050 | 350 | nein | 5 | 120 | 80 % |
| | 2,4-dion (400) | | | | | | |
| 4O | 6-Amino-1-methyl-1,4-dihydro- | 0.050 | 350 | nein | 3 | 120 | 98 % |
| | chinoxalin-2,3-dion (300) | | | | | | |
| 4P | 4-Tolylamin (100) | 0.029 | 220 | nein | 0.5 | 120 | 94 % |
| 4Q | 2-Amino-benzamid (100) | 0.025 | 250 | nein | 3 | 120 | 95 % |
| 4R | 4-Amino-benzamid (100) | 0.042 | 350 | nein | 2.75 | 120 | 75 % |

**Tabelle 2 (Beispiele 4A-4R, Massenspektrometrie)**

| Beispiel | MALDI-TOF (DHB; m/z) | Beispiel | MALDI-TOF (DHB; m/z) |
|---|---|---|---|
| 4a | 652.8 | 4j | 842.7 (M+Na⁺) |
| 4b | 653.6 | 4k | 732.8 |
| 4c | 662.6 | 4l | 761.8 |
| 4d | 662.6 | 4m | 706.2 |
| 4e | 682.0 | 4n | 788.8 |
| 4f | 648.7 | 4o | 788.3 |
| 4g | 708.7 | 4p | 620.6 |
| 4h | 620.4 | 4q | 678.0 |
| 4i | 662.6 | 4r | 678.5 |

### Beispiel 5

In 12,0 Teile o-Dichlorbenzol werden 1,0 Teile feingepulvertes Säurechlorid aus Beispiel 3 vorgelegt. Zu der Reaktionsmischung gibt man 1,4 Teile 3,5-Dichloranilin, gelöst in 3,0 Teilen o-Dichlorbenzol. Nach einer Reaktionszeit von 2 Stunden bei 120°C wird der Ansatz auf Raumtemperatur gekühlt und der Niederschlag abfiltriert, mit Ethanol und mit Wasser gewaschen. Das Rohpigment wird in DMF suspendiert und bei 120°C gerührt. Der Niederschlag wird heiß abfiltriert, mit DMF und anschließend mit Wasser gewaschen, im Vakuum getrocknet und ergibt ein braunes Produkt der folgenden Formel, 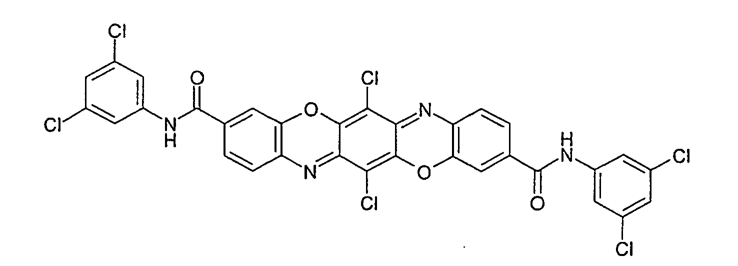 Ausbeute: 45 %
MALDI-TOF (DHB; m/z): 730.7

### Anwendungsbeispiele

4 Teile eines Pigments aus der nachstehenden Tabelle werden mit 96 Teilen eines Gemischs aus 50 Teilen einer 60 gew.-%igen Lösung von Cocosaldehyd-MelaminHarz in Butanol, 10 Teilen Xylol und 10 Teilen Ethylenglykolmonomethylether in einer Perlmühle für 30 min gemahlen.
Die erhaltene Dispersion wird auf eine Pappkarte aufgetragen und nach 30 min Lufttrocknung für 30 min bei 140°C eingebrannt. Die Lösemittelechtheiten, Farbstärken und Lichtechtheiten der in den vorstehenden Beispielen hergestellten Pigmenten sind in Tabelle 3 angegeben.

**Tabelle 3 (Beispiele 4A-4R und 5)**

| Bsp. | Aminkomponente | Farbe | LME | FST | LiE/VT | LiE/AH |
|---|---|---|---|---|---|---|
| 4A | 2-Methoxy-phenylamin | blaust. Rot | 4 | 2.18 | 6-7 | 6 |
| 4B | 3-Methoxy-phenylamin | blaust. Rot | 4-5 | 2.58 | 6-7 | 6 |
| 4C | 2-Chloranilin | Braun | 4-5 | 1.68 | 8 | 6-7 |
| 4D | 4-Chloranilin | gelbst. Rot | 4 | 7.56 | 7-8 | 6 |
| 4E | 2-Ethoxy-phenylamin | blaust. Rot | 4-5 | 1.71 | 7-8 | 6-7 |
| 4F | 3,5-Dimethylanilin | gelbst. Rot | 4 | 4.30 | 7-8 | 6 |
| 4G | 2-Aminobenzoesäure- | rotst. Braun | 3-4 | 3.66 | 8 | 6-7 |
| | methylester | | | | | |
| 4H | 3-Tolylamin | Rot/Bordo | 4-5 | 2.70 | 6-7 | 6 |
| 4I | 3-Chloranilin | blaust. Rot | 4 | 2.67 | 7-8 | 6 |
| 4J | 6-Amino-7-methoxy-1,4- | rotst. Violett | 5 | 2.09 | 8 | 7 |
| | dihydro-chinoxalin-2,3-dion | | | | | |
| 4K | 5-Amino-1-methyl-1,3- | blaust. Violett | 4-5 | 4.23 | 8 | 7 |
| | dihydro-benzimidazol-2-on | | | | | |
| 4L | 5-Amino-1-ethyl-1,3-dihydro- | Violett | 4 | 2.75 | 8 | 7-8 |
| | benzimidazol-2-on | | | | | |
| 4M | 4-Aminoacetanilid | rotst. Violett | 5 | 4.45 | 8 | 7 |
| 4N | 6-Amino-1-methyl-1H- | rotst. Violett | 5 | 4.38 | 8 | 7 |
| | chinazolin-2,4-dion | | | | | |
| 4O | 6-Amino-1-methyl-1,4- | rotst. Violett | 4-5 | 5.15 | 7-8 | 6 |
| | dihydro-chinoxalin-2,3-dion | | | | | |
| 4P | 4-Tolylamin | blaust. Rot | 5 | 1.81 | 6-7 | 4-5 |
| 4Q | 2-Amino-benzamid | Violett | 4-5 | 2.90 | 8 | 7-8 |
| 4R | 4-Amino-benzamid | Rot | 5 | 2.42 | 7-8 | 6 |
| 5 | 3,5-Dichloranilin | gelbst. Braun | 2-3 | 4.41 | 8 | 6-7 |

### Vergleichsbeispiel

In 24,5 Teile o-Dichlorbenzol werden 1,0 Teile feingepulvertes Säurechlorid aus Beispiel 3 vorgelegt. Nach der Zugabe von 1,0 Teilen Anilin wird die Reaktionsmischung auf 150°C erhitzt. Es werden weitere 10,0 Teile o-Dichlorbenzol zugegeben und der Reaktionsansatz anschließend innerhalb von 30 min auf 170°C erwärmt. Die Suspension wird eine weitere halbe Stunde bei dieser Temperatur gerührt. Nach dem Abkühlen wird das Rohprodukt abfiltriert, der Filterkuchen mit o-Dichlorbenzol und mit Wasser gewaschen und bei 80°C im Vakuum getrocknet. Das Rohpigment wird in 20,0 Teile DMF suspendiert und unter Rühren zum Rückfluss erhitzt. Nach 2-stündiger Reaktionszeit wird der Niederschlag heiß abfiltriert, mit DMF und anschließend mit Wasser gewaschen, im Vakuum getrocknet und ergibt ein rotes Produkt der folgenden Formel, 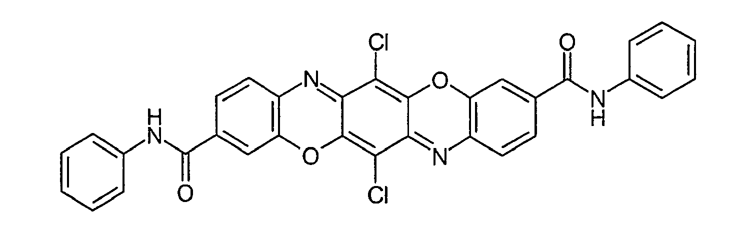 Ausbeute: 86 %

Diese Verbindung erwies sich aufgrund der geringen Lichtechtheit (LiE/AH = 3) als nicht geeignet für die praktische Anwendung.
- LME =: Lösemittelechtheit
- FST =: Farbstärke
- LiE / VT =: Lichtechtheit Vollton
- LiE / AH =: Lichtechtheit Aufhellung

Die Lösemittelechtheit wurde gegen die 5-stufige Grauskala nach DIN 54002 ermittelt.

Die Farbstärke gibt an, wie viele Teile TiO₂ notwendig sind, um 1 Teil Buntpigment auf 1/3 Standard-Farbtiefe zu bringen: 1 : x TiO₂

### (Farbstärke und ihre Messung ist definiert nach DIN EN ISO 787-26)

Die Lichtechtheit wurde gegen die 8-stufige Blauskala in Anlehnung an DIN 54003 im Vollton und in der Aufhellung bestimmt: "8" entspricht der höchsten, "1" der niedrigsten Lichtechtheit.

## Patentansprüche

1. Triphendioxazinpigment der Formel (I) 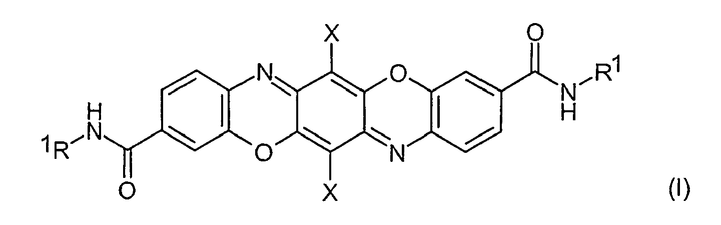 wobei
X für Wasserstoff oder Chlor, und
R¹ für Phenyl steht, das mit 1 bis 5 Resten aus der Gruppe C₁-C₄-Alkyl, Halogen, C₁-C₄-Alkoxy, Acetylamino, Aminocarbonyl, Methylaminocarbonyl und C₁-C₄-Alkoxycarbonyl substituiert ist;
oder für Phenyl steht, das in 2,3- oder in 3,4-Position mit einem bivalenten Rest der Formel -NH-(CO)ₘ -NR²-, -CR²=CH-CO-NH-, -CR²=N-CO-NH-, -CO-NH-CO-NR²-, -CO-(NH)ₘ-CO- oder -O-(CO)ₘ-NH-
unter Bildung eines fünf- oder sechsgliedrigen Ringes anneliert ist,
wobei R² Wasserstoff, Methyl, Ethyl oder Phenyl und m 1 oder 2 bedeuten.

2. Triphendioxazinpigment nach Anspruch 1, **gekennzeichnet durch** die Formel (la), 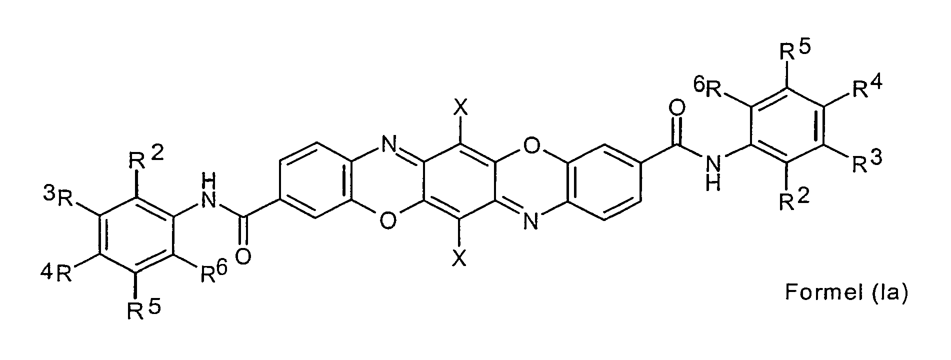 worin R², R³, R⁴, R⁵ und R⁶, unabhängig voneinander, für Wasserstoff, Halogen, insbesondere Chlor, C₁-C₄-Alkyl, insbesondere Methyl oder Ethyl, oder C₁-C₄-Alkoxy, insbesondere Methoxy oder Ethoxy, stehen, wobei R², R³ und R⁴ nicht gleichzeitig Wasserstoff sind.

3. Triphendioxazinpigment nach Anspruch 1, **gekennzeichnet durch** die Formel (Ib), 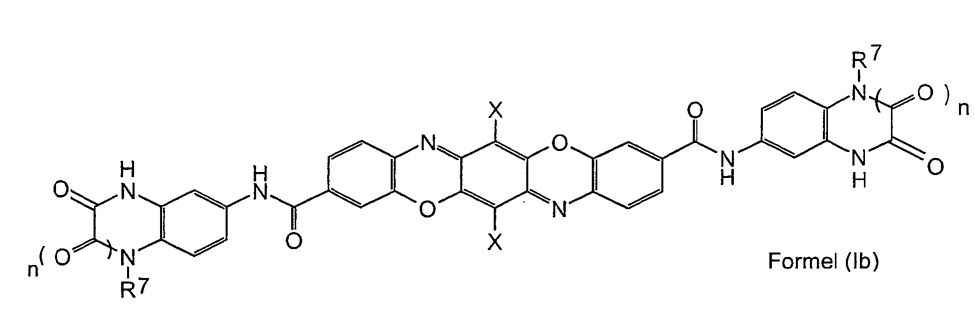 worin R⁷ für Wasserstoff, Phenyl oder C₁-C₄-Alkyl, insbesondere Methyl oder Ethyl, und
n für 0 oder 1 stehen.

4. Triphendioxazinpigment nach Anspruch 1, **gekennzeichnet durch** die Formel (Ic), 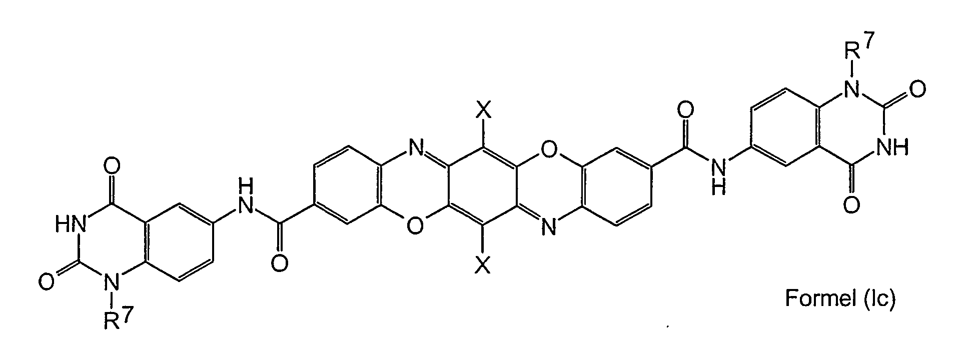 worin R⁷ für Wasserstoff, Phenyl oder C₁-C₄-Alkyl, insbesondere Methyl oder Ethyl, stehen.

5. Verfahren zur Herstellung eines Triphendioxazinpigments nach einem oder mehreren der Ansprüche 1 bis 4, **dadurch gekennzeichnet, dass** eine Verbindung der Formel (III) 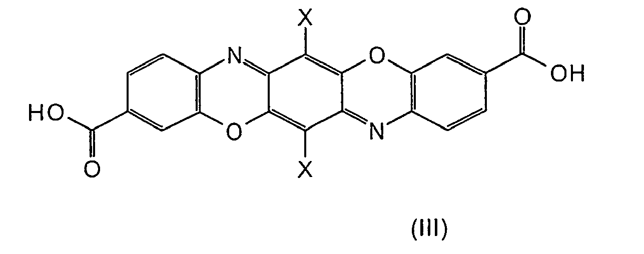 mit einem anorganischen Säurechlorid zu einem Säurechlorid der Formel (IV) 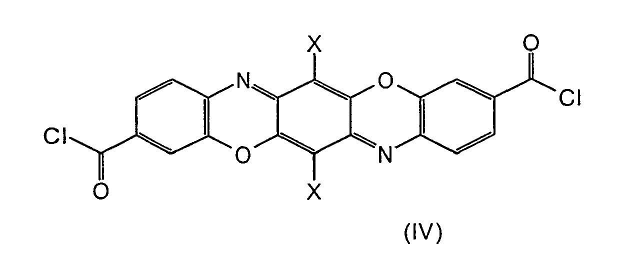 umgesetzt und dieses mit einem aromatischen Amin der Formel NH₂-R¹ in einem aprotischen organischen Lösemittel kondensiert wird.

6. Verfahren nach Anspruch 5, **dadurch gekennzeichnet, dass** das Zwischenprodukt der Formel (III) durch Ringschluss einer Verbindung der Formel (II) 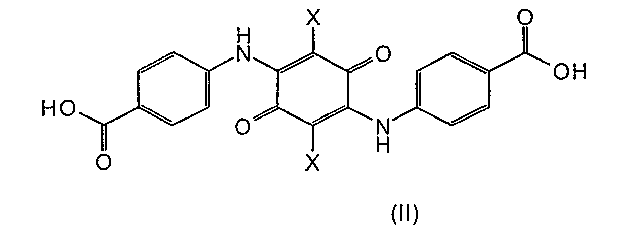 in konzentrierter Schwefelsäure und mit einem Oxidationsmittel erfolgt.

7. Verwendung eines Triphendioxazinpigments nach einem oder mehreren der Ansprüche 1 bis 4 zum Pigmentieren von hochmolekularen organischen Materialien natürlicher oder synthetischer Herkunft.

8. Verwendung nach Anspruch 7 zum Pigmentieren von Kunststoffen, Harzen, Lacken, Anstrichfarben, elektrophotographischen Tonern und Entwicklern, Elektretmaterialien, Farbfiltern, Tinten, Druckfarben und Saatgut.

## Claims

1. A triphendioxazine pigment of formula (I) 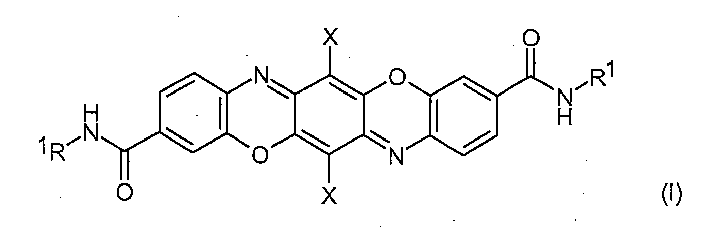 where
X is hydrogen or chlorine, and
R¹ is phenyl substituted with 1 to 5 radicals selected from the group consisting of C₁-C₄-alkyl, halogen, C₁-C₄-alkoxy, acetylamino, aminocarbonyl, methylaminocarbonyl and C₁-C₄-alkoxycarbonyl ; or is phenyl fused 2,3- or 3,4- with a bivalent radical of the formula -NH-(CO)ₘ-NR²-, -CR²=CH-CO-NH-, -CR²=N-CO-NH-,
-CO-NH-CO-NR²-, -CO-(NH)ₘ-CO- or -O-(CO)ₘ-NH-
to form a five- or six-membered ring,
where R² is hydrogen, methyl, ethyl or phenyl and m is 1 or 2.

2. A triphendioxazine pigment according to claim 1, **characterized by** formula (Ia), 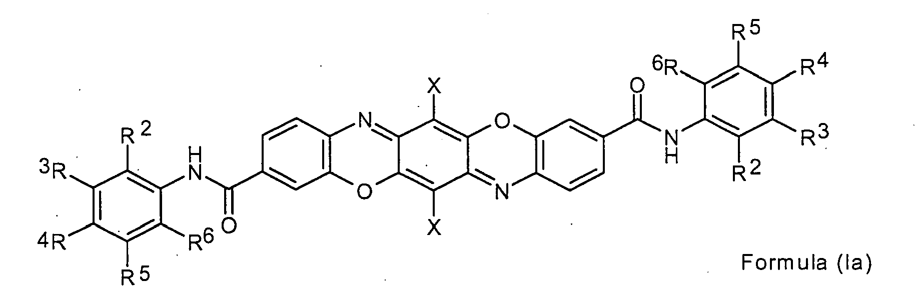 where R², R³, R⁴ R⁵ and R⁶ are independently hydrogen, halogen, especially chlorine, C₁-C₄-alkyl, especially methyl or ethyl, or C₁-C₄-alkoxy, especially methoxy or ethoxy, although R², R³ and R⁴ are not all hydrogen.

3. A triphendioxazine pigment according to claim 1, **characterized by** formula (Ib), 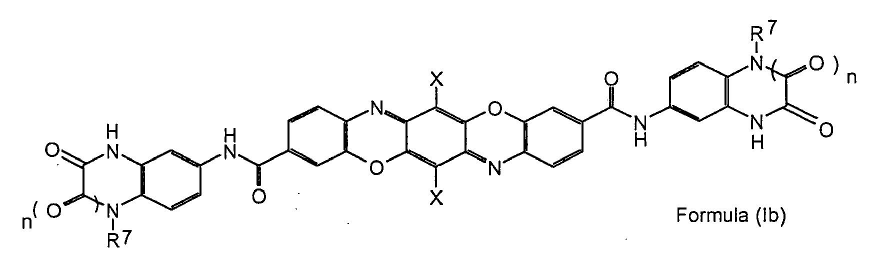 where R⁷ is hydrogen, phenyl or C₁-C₄-alkyl, especially methyl or ethyl, and
n is 0 or 1.

4. A triphendioxazine pigment according to claim 1, **characterized by** formula (Ic), 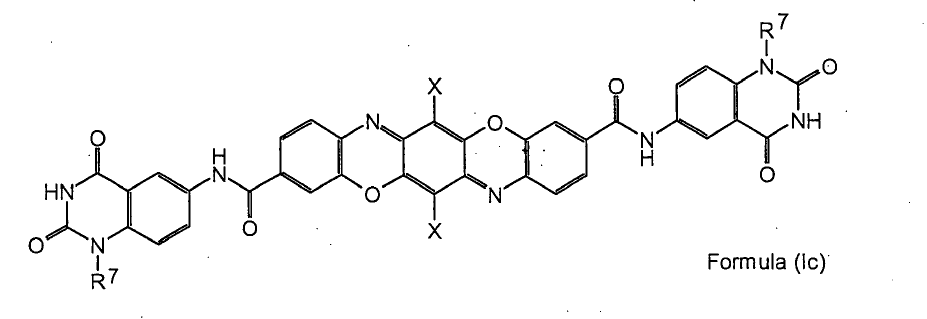 where R⁷ is hydrogen, phenyl or C₁-C₄-alkyl, especially methyl or ethyl.

5. A process for preparing a triphendioxazine pigment according to one or more of claims 1 to 4, which comprises reacting a compound of formula (III) 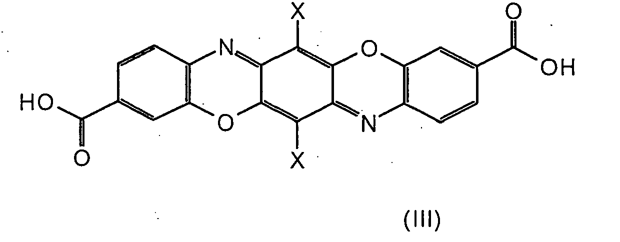 with an inorganic acid chloride to form an acid chloride of formula (IV) 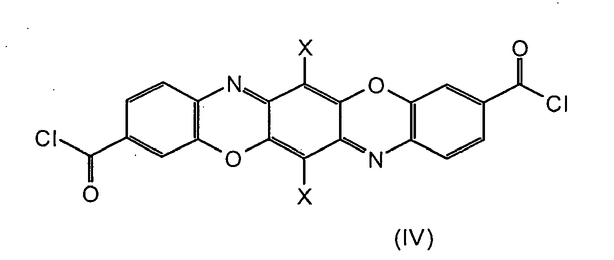 and condensing the latter with an aromatic amine of the formula NH₂-R¹ in an aprotic organic solvent.

6. The process according to claim 5 wherein the intermediate of formula (III) is effected by ring closure of a compound of formula (II) 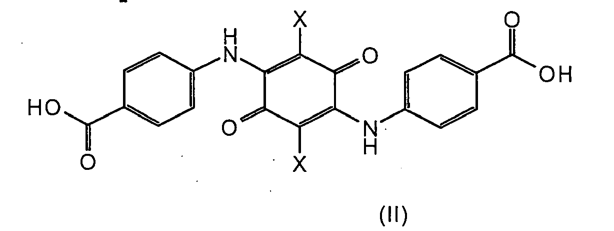 in concentrated sulfuric acid and using an oxidizing agent.

7. The use of a triphendioxazine pigment according to one or more of claims 1 to 4 for pigmenting macromolecular organic materials of natural or synthetic origin.

8. The use according to claim 7 for pigmenting plastics, resins, coatings, paints, electrophotographic toners and developers, electret materials, color filters, inks, including printing inks, and seed.

## Revendications

1. Pigment de triphéndioxazine de formule (I) 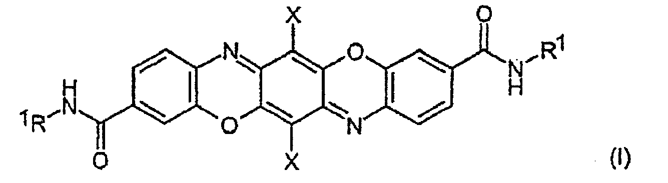 où
X représente hydrogène ou chlore, et
R¹ représente phényle, qui est substitué par 1 à 5 radicaux du groupe formé par alkyle en C₁-C₄, halogène, alcoxy en C₁-C₄, acétylamino, aminocarbonyle, méthylaminocarbonyle et alcoxycarbonyle en C₁-C₄ ;
ou représente phényle, qui est condensé en position 2,3 ou 3,4 avec un radical divalent de formule -NH-(CO)ₘ-NR²-, -CR²=CH-CO-NH-, -CR²=N-CO-NH-, -CO-NH-CO-NR²-, -CO-(NH)ₘ-CO- ou -O-(CO)ₘ-NH- avec formation d'un cycle de cinq ou six chaînons,
R² signifiant hydrogène, méthyle, éthyle ou phényle et m valant 1 ou 2.

2. Pigment de triphéndioxazine selon la revendication 1, **caractérisé par** la formule (Ia), 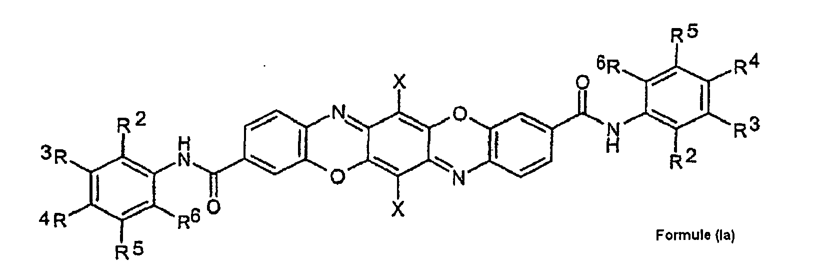 dans laquelle
R², R³, R⁴, R⁵ et R⁶ représentent, indépendamment l'un de l'autre, hydrogène, halogène, en particulier chlore, alkyle en C₁-C₄, en particulier méthyle ou éthyle, ou alcoxy en C₁-C₄, en particulier méthoxy ou éthoxy, R², R³ et R⁴ ne représentant pas simultanément hydrogène.

3. Pigment de triphéndioxazine selon la revendication 1, **caractérisé par** la formule (Ib), 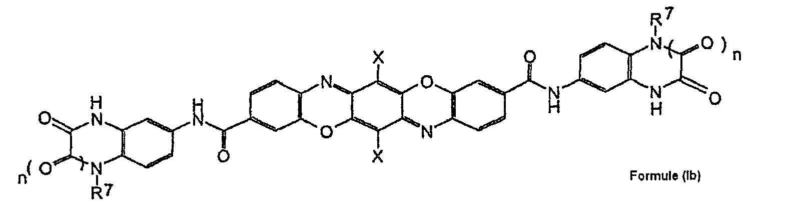 dans laquelle
R⁷ représente hydrogène, phényle ou alkyle en C₁-C₄, en particulier méthyle ou éthyle, et
n vaut 0 ou 1.

4. Pigment de triphéndioxazine selon la revendication 1, **caractérisé par** la formule (Ic), 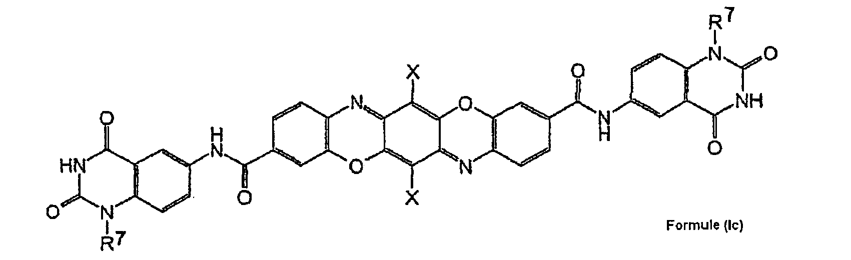 dans laquelle
R⁷ représente hydrogène, phényle ou alkyle en C₁-C₄, en particulier méthyle ou éthyle.

5. Procédé pour la préparation d'un pigment de triphéndioxazine selon l'une ou plusieurs des revendications 1 à 4, **caractérisé en ce qu'**on transforme un composé de formule (III) 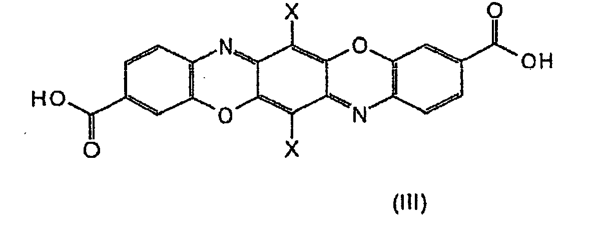 avec un chlorure d'acide inorganique en un chlorure d'acide de formule (IV) 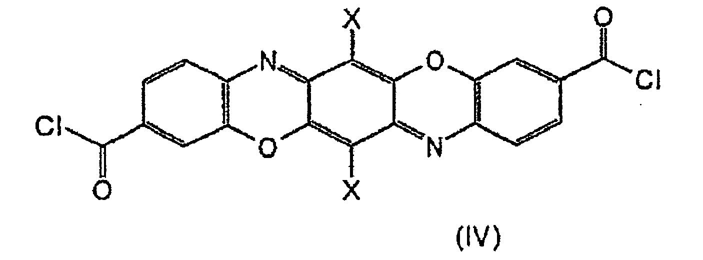 et on condense ensuite celui-ci avec une amine aromatique de formule NH₂-R¹ dans un solvant organique aprotique.

6. Procédé selon la revendication 5, **caractérisé en ce que** le produit intermédiaire de formule (III) est obtenu par fermeture de cycle d'un composé de formule (II) 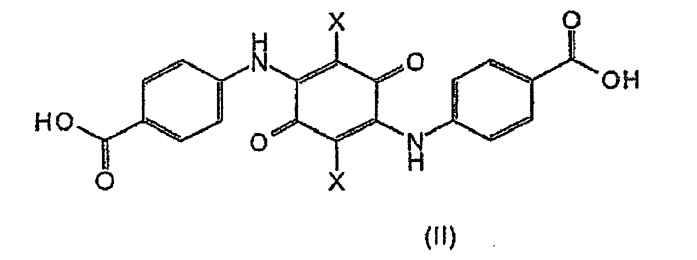 dans de l'acide sulfurique concentré et avec un oxydant.

7. Utilisation d'un pigment de triphéndioxazine selon l'une ou plusieurs des revendications 1 à 4 pour pigmenter des matériaux organiques de haut poids moléculaire d'origine naturelle ou synthétique.

8. Utilisation selon la revendication 7 pour la pigmentation de matériaux synthétiques, de résines, de laques, de peintures, de toners et d'agents de développement électrophotographiques, de matériaux pour électrets, de filtres colorés, d'encres, d'encres d'imprimerie et de graines.
